# EUROPÄISCHE PATENTSCHRIFT

(11) **EP 2 416 030 B1**
(45) Veröffentlichungstag und Bekanntmachung des Hinweises auf die Patenterteilung: **26.12.2012**
(21) Anmeldenummer: 11175487.5
(22) Anmeldetag: 27.07.2011
(51) Int. Cl.: B60G 99/00, B60N 2/54

(54) **Horizontalfedereinrichtung für Fahrzeugsitze mit Elastomerfederelement mit progressiver Federkennlinie**
Horizontal spring device for vehicle seats with elastomer spring element with progressive spring characteristics
Dispositif de suspension horizontale pour siège de véhicules dotés de ressorts en élastomère et d'une courbe caractéristique progressive

(30) Priorität: 04.08.2010 DE 102010033419
(43) Veröffentlichungstag der Anmeldung: 08.02.2012
(73) Patentinhaber: GRAMMER AG, 92224 Amberg (DE)
(72) Erfinder: Kolb, Jens, 92281 Königstein (DE)
(74) Vertreter: Hannke, Christian

(56) Entgegenhaltungen:
- WO-A2-03/063650
- DE-A1- 2 816 616
- DE-A1-102005 028 725
- US-A- 3 436 042
- US-A- 4 002 315
- US-A- 5 331 750

## Beschreibung

Die Erfindung betrifft eine Fahrzeugschwingungsvorrichtung mit einer Horizontalfedereinrichtung, welche zwischen einem Fahrzeugsitz und/oder einer Fahrerkabine und einem Basiselement eines Fahrzeuges angeordnet ist und zur horizontalen Federung und/oder Dämpfung des Fahrzeugsitzes und/oder der Fahrerkabine gegenüber dem Basiselement geeignet ist (siehe z.B. DE 10 2005 028 725 A1, dem Oberbegriff entsprechend).

Um einem Fahrer oder auf Fahrgästen während des oft mehrstündigen Sitzens in einem Fahrzeug das Sitzen möglichst angenehm zu machen, weisen Fahrzeugsitze üblicherweise Feder- und/oder Dämpfungssysteme auf. Diese Systeme sind dazu geeignet, vertikale Stöße abzufangen oder abzufedern. Oft sind derartige Federsysteme gleichzeitig höhenverstellbar ausgelegt, um eine Anpassung der Sitzhöhe auf die Größe und Sitzgewohnheiten des Fahrers einstellen zu können.

Besonders in professionellen Anwendungen sind sehr gut gefederte Fahrzeugsitze notwendig, da von dem Fahrer oft viele Tage in Folge jeweils für mehrere Stunden auf einem derartigen Fahrzeugsitz gesessen wird. Beispiele für Berufsgruppen, die derartigen Belastungen ausgesetzt sind, sind Führer von Bussen, Bahnen, LKW, Traktoren, Baufahrzeugen, Fahrzeugen aus dem Bergbaubereich und ähnlichen, sowie teilweise auch von Schiffen und Flugzeugen. Daher ist nicht nur aus Gründen des Komforts, sondern auch unter Aspekten der Arbeitssicherheit und der Vorbeugung von langfristigen körperlichen Schäden der Fahrer ein angenehmes Sitzgefühl und ausreichende Dämpfung notwendig.

Ein System zur Federung und/oder Dämpfung des Fahrzeugsitzes kann mehrteilig ausgebildet sein, um eine bestmögliche Federung und/oder Dämpfung zu gewährleisten. Neben der Federung und/oder Dämpfung der Räder und/oder der Radaufhängung, beispielsweise in Form von gasgefüllten Reifen und/oder Federn (Stoßdämpfern), schließt ein solches System oft auch die Federung des Fahrzeugsitzes und in besonderen Anwendungen auch die Federung ganzer Fahrzeugteile wie beispielsweise der Fahrzeugführerkabine ein.

Neben diesem Feder- und/oder diesen Dämpfungssystemen, die überwiegend Bewegungen in vertikaler Richtung federn bzw. dämpfen, ist es auch wünschenswert, Stöße in Längs- und/oder Querrichtung des Fahrzeuges abzufedern und/oder zu dämpfen.

In der o. g., gattungsbildenden DE 10 2005 028 725 A1 ist eine Fahrzeugsitzaufhängung mit omnidirektionalem Pufferelement offenbart. Dieses Pufferelement ist in alle horizontalen Richtungen beweglich im Zentrum eines Basiselementes eines Fahrzeugsitzes angeordnet. Über eine Vielzahl von Aufhängungen ist es mit der Basis verbunden und gegenüber dieser federnd beweglich.

In der Druckschrift DE 35 17 345 C2 ist eine Federvorrichtung mit einer elastischen Schraubenzugfeder offenbart. Die Schraubenzugfeder ist dabei zwischen ortsfesten Aufhängungen angeordnet und wird nicht in ihrer Längsrichtung verformt. Die Verformung erfolgt quer zur Ausrichtung der Schraubenzugfeder durch zwei gegenüberliegende gekrümmte Elemente, deren Krümmung sich über mehrere Windungen der Schraubenzugfeder erstreckt. Bei einer Auslenkung dieser Elemente wird die Schraubenzugfeder druckbeaufschlagt und verformt. Durch eine derartige Anordnung ist es möglich, nichtlineare Abhängigkeiten der Federkraft zu realisieren, wobei diese nichtlineare Federkraft nicht ausschließlich durch die Federkonstante der Schraubenzugfeder vorgegeben ist, sondern auch über die gekrümmten Elemente zum Verformen der Schraubenzugfeder beeinflusst werden kann.

Die Aufgabe der vorliegenden Erfindung ist es daher, eine Fahrzeugschwingungsvorrichtung mit einer Horizontalfedereinrichtung bereitzustellen, welche ein Elastomerfederelement mit progressiver Federkennlinie umfasst, wobei die Fahrzeugschwingungsvorrichtung zwischen einem Fahrzeugsitz und/oder einer Fahrerkabine und einem Basiselement eines Fahrzeuges angeordnet ist und zur horizontalen Federung und/oder Dämpfung des Fahrzeugsitzes und/oder der Fahrerkabine gegenüber dem Basiselement geeignet sein soll.

Diese Aufgabe wird mittels einer Fahrzeugschwingungsvorrichtung gelöst, welche die Merkmale des Patentanspruches 1 aufweist.

Ein wesentlicher Gegenstand der Erfindung besteht in einer Fahrzeugschwingungsvorrichtung, welche eine Horizontalfedereinrichtung umfasst, welche zwischen einem Fahrzeugsitz und/oder einer Fahrerkabine und einem Basiselement eines Fahrzeuges angeordnet ist und zur horizontalen Federung und/oder Dämpfung des Fahrzeugsitzes und/oder der Fahrerkabine gegenüber dem Basiselement geeignet ist, wobei die Horizontalfedereinrichtung im wesentlichen parallel zu einer Oberfläche des Basiselementes angeordnet ist und ein Elastomerfederelement umfasst, welches eine charakteristische Federkennlinie aufweist. Durch eine derartige Fahrzeugschwingungsvorrichtung ist es sehr platzsparend möglich, bestimmte Fahrzeugteile gegenüber einem Basiselement eines Fahrzeuges in horizontaler Richtung federnd zu lagern. Die Verwendung eines Elastomerfederelementes bietet die Möglichkeit, auf komplizierte mehrdimensionale Aufhängungen von konventionellen Schraubenzugfedern verzichten zu können. Dadurch kann eine erfindungsgemäße Fahrzeugschwingungsvorrichtung sehr wartungsarm sein und zusätzlich äußerst flach ausgebildet sein. Damit ist sie besonders zur Federung/Dämpfung von horizontalen Bewegungen eines Fahrzeugsitzes oder einer Führerkabine geeignet, wie sie beispielsweise durch starke Beschleunigungen wie Bremsen, Anfahren, starken Gefällen und Steigungen und ähnlichem auftreten, beispielsweise in der Landwirtschaft durch Bodenunebenheiten.

Das Basiselement kann dabei jedes Element des Fahrzeuges sein, gegenüber dem ein anderes Element des Fahrzeuges mittels der Horizontalfedereinrichtung federnd angeordnet ist. Ist das zu federnde Element ein Fahrzeugsitz, kann beispielsweise der Fahrzeugrahmen, die Insassenkabine, die Fahrerkabine oder ein anderes geeignetes Element als Basiselement genutzt werden. Soll die gesamte Fahrerkabine gegenüber einem Basiselement federnd gelagert werden, ist das Basiselement bevorzugt der Fahrzeugrahmen oder die Karosserie.

Erfindungsgemäß weist das Elastomerfederelement eine progressive Federkennlinie auf.

In einer weiteren bevorzugten Ausführungsform ist die Fahrzeugschwingungsvorrichtung unterhalb eines Fahrzeugsitzes angeordnet und abschnittsweise mit diesem verbunden. Durch die flache Ausführung der Fahrzeugschwingungsvorrichtung ist es möglich, diese platzsparend unterhalb der Sitzfläche in die Fahrzeugsitzkonstruktion zu integrieren. Damit kann der auf einem derartigen Sitz befindliche Fahrzeuginsasse effizient vor starken Beschleunigungen in horizontaler Richtung geschützt werden. Besonders bei einer sehr langen Nutzung eines derartigen Fahrzeugsitzes können somit große Verbesserungen im Komfort und in der Vorbeugung von Haltungsschäden der Fahrzeuginsassen realisiert werden. Besonders im professionellen Kraftfahrzeugbereich, wo derartige Fahrzeugsitze sehr lange von der selben Person genutzt werden, ist eine solche Fahrzeugschwingungsvorrichtung auch aus Arbeitssicherheitsaspekten sinnvoll, da so langfristig die Gefahr von Haltungsschäden der Benutzer reduziert werden kann.

Vorteilhafterweise ist das Elastomerfederelement der Fahrzeugschwingungsvorrichtung direkt mit dem Basiselement verbunden, falls das verwendete Elastomer zugbelastbar ist und mittels einer losen Haltevorrichtung, welche als Vorsprünge aus dem Basiselement ausgebildet sind, die in komplementär geformte Aussparungen in dem Elastomerfederelement greifen, mit dem Basiselement verbunden, falls das verwendete Elastomer nicht zugbelastbar ist. Nicht alle Elastomere sind zugbelastbar. Um trotzdem eine lange Lebensdauer des Elastomerfederelements zu gewährleisten, müssen bei der Verwendung derartiger Elastomere entsprechende Vorkehrungen getroffen werden, die eine schädliche Zugbelastung vermeiden. Eine Möglichkeit besteht darin, nicht-zugbelastbare Elastomere, im Gegensatz zu zugbelastbaren Elastomeren, nicht formschlüssig mit dem Basiselement zu verbinden, sondern zwischen zwei losen Haltevorrichtung zu lagern. Bei einer Verformung gleitet das Elastomerfederelement aus einer dieser Haltevorrichtung in Richtung der Beschleunigung und in Richtung auf die jeweils gegenüberliegende lose Haltevorrichtung heraus. Es erfolgt keine Federung und/oder Dämpfung durch Zugbelastung des Elastomers. Die Federung und/oder Dämpfung resultiert lediglich aus dem Komprimieren des in Richtung der Beschleunigung vorne liegenden Bereichs des Elastomerfederelements. Bei einer Rückkehr des Elastomerfederelements in die Ausgangsposition wird dieses so geführt, dass es wieder lose in die Haltevorrichtung hinein gleitet.

In einer bevorzugten Ausführungsform ist das Elastomerfederelement scheibenartig ausgebildet und weist Ausprägungen, Einschnitte und/oder Aussparungen auf. Diese Ausführungsform mit Ausprägungen, Einschnitten und/oder Aussparungen ermöglicht es, das Elastomerfederelement auf bestimmte Rahmenbedingungen anzupassen. So kann beispielsweise die Federkraft in gewünschter Weise beeinflusst werden.

In einer weiteren bevorzugten Ausführungsform sind die Ausprägungen, Einschnitte und/oder Aussparungen in dem Elastomerfederelement zur gezielten Modulation der Federkennlinie geeignet. Damit ist es neben der Veränderung der Federkraft auch möglich, die Progressivität (oder Degressivität) der Federkennlinie in gewünschter Weise zu verändern.

Der Verlauf der Federkennlinie kann durch Änderungen im Material verändert werden. Unabhängig von Materialeigenschaften ist zusätzlich sowohl durch Änderungen der Geometrie als auch durch Änderungen der Position der Ausprägungen, Einschnitte und/oder Aussparungen in dem Elastomerfederelement eine Anpassung des Verlaufs der Federkennlinie möglich. Daher sind vorteilhafterweise durch die Geometrie und die Position der Ausprägungen, Einschnitte und/oder Aussparungen in dem Elastomerfederelement weg-, geschwindigkeits- und/oder richtungsabhängige progressive Federkennlinien realisierbar.

Zur Anpassung der Federkennlinie durch Ausprägungen, Einschnitte und/oder Aussparungen in dem Elastomerfederelement sind verschiedene Geometrien besonders geeignet. In einer bevorzugten Ausführungsform der Fahrzeugschwingungsvorrichtung weist eine Grundfläche der Ausprägungen, Einschnitte und/oder Aussparungen in dem Elastomerfederelement die Form einer Linie, eines Vielecks, eines Achtecks, eines Sechsecks, eines Fünfecks, eines Vierecks, eines Parallelogramms, eines Rechteckes, eines Dreiecks, eines gleichschenkligen Dreiecks, eines gleichseitigen Dreiecks, eines Kreises, eines Ovals und/oder eines Sterns auf. Je nach Position, Größe und Anordnung der Ausprägungen, Einschnitte und/oder Aussparungen in dem Elastomerfederelement zueinander sind somit auf einfache Art und Weise verschiedene weg-, geschwindigkeits- und/oder richtungsabhängige progressive Federkennlinien zu erzeugen.

In einer bevorzugten Ausführungsform umfasst das Elastomerfederelement ein Material, welches bei Druck- und/oder Zugbeanspruchung eine dämpfende Wirkung aufweist, welche gewährleistet, dass bei einer Verformung (9) des Elastomerfederelements (1) aus einer Ausgangslage in eine Belastungslage und bei dem Zurückkehren des Elastomerfederelements aus der Belastungslage in die Ausgangslage diese Verformung gedämpft erfolgt, und somit unerwünschte Eigenresonanzen der Fahrzeugschwingungsvorrichtung reduziert werden. Die Verwendung von Elastomeren für Fahrzeugschwingungsvorrichtungen weist den großen Vorteil gegenüber beispielsweise metallischen Schraubenzugfedern auf, dass sie gleichzeitig neben einer federnden Komponente auch eine dämpfende Komponente aufweisen können. Dadurch wird ein Teil der Bewegungsenergie, die auf das Elastomerfederelement übertragen wird nicht in diesem in Form von potentieller (Verformungs-) Energie gespeichert, sondern in Wärme umgewandelt. Dadurch wird eine unerwünschte Eigenresonanz und ein Aufschaukeln weitgehend vermieden.

In einer bevorzugten Ausführungsform der Fahrzeugschwingungsvorrichtung ist das Elastomerfederelement über mindestens ein Lager mit dem Fahrzeugsitz verbunden, wobei dieses Lager einen Freilauf aufweist, in welchem der Fahrzeugsitz in mindestens einer horizontalen Richtung, bevorzugt in Längsrichtung des Fahrzeuges, abschnittsweise frei beweglich ist, ohne das Elastomerfederelement zu verformen. Ein derartiger Freilauf ermöglicht es, den Fahrzeugsitz in einem engen Bereich in horizontaler Richtung frei zu bewegen, ohne dass eine rückstellende Federkraft wirkt. Dadurch wird es für die auf diesem Sitz befindliche Person möglich, die Sitzfläche individuell nach eigenen Wünschen zu positionieren. Ebenso ist eine Bewegung der unteren Rückenmuskulatur möglich, wodurch ähnliche Effekte wie durch das Sitzen auf einem Gymnastikball oder einem Ballkissen erreicht werden können.

Der Freilauf in dem Lager, welches zwischen dem Fahrzeugsitz und dem Elastomerfederelement angeordnet ist, ist jedoch nicht zwingend erforderlich. Sollte eine vollständige oder eine nahezu vollständige Rückführung des Sitzes in die Ruhelage gewünscht sein, kann der Freilauf verkleinert werden oder sogar nicht vorgesehen sein. Damit wird die Kopplung zwischen Sitz und Elastomerfederelement erhöht und somit auch Bewegungen zumindest anteilig auf den Sitz übertragen, welche bei Vorhandensein eines Freilaufs durch die in einem gewissen Bereich vollständige Entkopplung nicht übertragen würden. Geringe Vibrationen werden mit einem entsprechend ausgelegten Freilauf nicht übertragen. Es besteht somit eine verbesserte Isolation gegenüber Schwingungen.

In einer weiteren bevorzugten Ausführungsform der Fahrzeugschwingungsvorrichtung ist das scheibenartige Elastomerfederelement über ein einzelnes Lager, welches in mindestens einer horizontalen Richtung im Zentrum des Elastomerfederelementes angeordnet ist, mit dem Fahrzeugsitz verbunden. In dieser Ausführungsform ist vorgesehen, ein Verbindungselement zum Federungsoberteil im Zentrum des Elastomerfederelementes anzuordnen. In einigen Anwendungen können dadurch Vorteile gegenüber einer Verbindung über mehrere Verbindungselemente erreicht werden. So ist es beispielsweise recht einfach möglich, auch Beschleunigungen gezielt abzufedern, die nicht exakt in Fahrtrichtung oder horizontal senkrecht dazu auf den Fahrzeugsitz wirken.

In einer weiteren bevorzugten Ausführungsform der Fahrzeugschwingungsvorrichtung ist das scheibenartige Elastomerfederelement über mindestens zwei Lager, welche bevorzugt in den in Längsrichtung des Fahrzeugs gegenüberliegenden Randbereichen des Fahrzeugsitzes angeordnet sind, mit diesem verbunden. Durch diese Fixierung des Elastomerfederelements gegenüber dem Fahrzeug wird die notwendige Stabilität gewährleistet. Ebenso wäre es jedoch auch denkbar, das Elastomerfederelement an dem Federungsoberteil zu fixieren und gegenüber dem Federungsunterteil beweglich auszuführen. Auch eine Ausführung ohne feste Fixierung am Federungsoberteil oder dem Federungsunterteil wäre denkbar.

Vorzugsweise weist eine Feder- und/oder Dämpferkennlinie des Elastomerfederelementes der Fahrzeugschwingungsvorrichtung eine Hysterese auf, welche Resonanzen nach einer Verformung des Elastomerfederelementes reduziert. Wie bereits dargestellt sind Elastomerfederelemente in der Lage, einen Teil der Bewegungsenergie nicht in Form von potentieller Energie zu speichern, sondern in Wärmeenergie umzuwandeln. Dadurch erfolgt die Rückstellung in die Ausgangsposition gedämpft. Die somit erzeugte Hysterese in der Feder-und/oder Dämpferkennlinie verhindert, dass Eigenresonanzen entstehen und ein Aufschaukeln der Fahrzeugschwingungsvorrichtung auftreten kann. Dadurch wird auch in sehr unwegsamem Gelände, wie beispielsweise beim Ackerbau, der Fahrkomfort drastisch erhöht.

Weitere Vorteile, Ziele und Eigenschaften vorliegender Erfindung werden anhand nachfolgender Beschreibung anliegender Figuren erläutert, in welcher beispielhaft erfindungsgemäße Fahrzeugschwingungsvorrichtungen mit einer Horizontalfedereinrichtung und einem Elastomerfederelement, welches eine progressive Federkennlinie aufweist, dargestellt sind. Bauteile der Fahrzeugschwingungsvorrichtung welche in den Figuren wenigstens im Wesentlichen hinsichtlich ihrer Funktion übereinstimmen, können hierbei mit gleichen Bezugsziffern gekennzeichnet sein, wobei diese Bauteile nicht in allen Figuren beziffert und erläutert sein müssen.

Es zeigen:
- Fig. 1:: eine Aufsicht auf ein achteckiges Elastomerfederelement in Ruhelage;
- Fig. 2:: eine Aufsicht auf ein achteckiges Elastomerfederelement in Ruhelage mit einer gegenüber dem in Fig. 1 gezeigten Elastomerfederelement veränderter Anzahl und Größe der Aussparungen;
- Fig. 3:: eine Aufsicht auf das in Fig. 2 gezeigte Elastomerfederelement jedoch in einer geringfügig ausgelenkten Position, bei der der Freilauf ausgenutzt wird;
- Fig. 4:: eine Aufsicht auf das in Fig. 2 gezeigte Elastomerfederelement, jedoch in einer stark ausgelenkten Position, bei der der Freilauf ausgenutzt wird und zusätzlich eine Verformung des Elastomerfederelements auftritt, in einer Anordnung innerhalb eines formschlüssigen Lagerverbundes;
- Fig. 5:: eine Aufsicht auf das in Fig. 2 gezeigte Elastomerfederelement, jedoch in einer stark ausgelenkten Position, bei der der Freilauf ausgenutzt wird und zusätzlich eine Verformung des Elastomerfederelements auftritt, in einer Anordnung innerhalb eines losen Lagerverbundes;
- Fig. 6:: eine Aufsicht auf ein rundes Elastomerfederelement in Ruhelage; und
- Fig. 7:: eine graphische Darstellung von Feder- / Dämpferkennlinien, die eine Hysterese aufweisen.

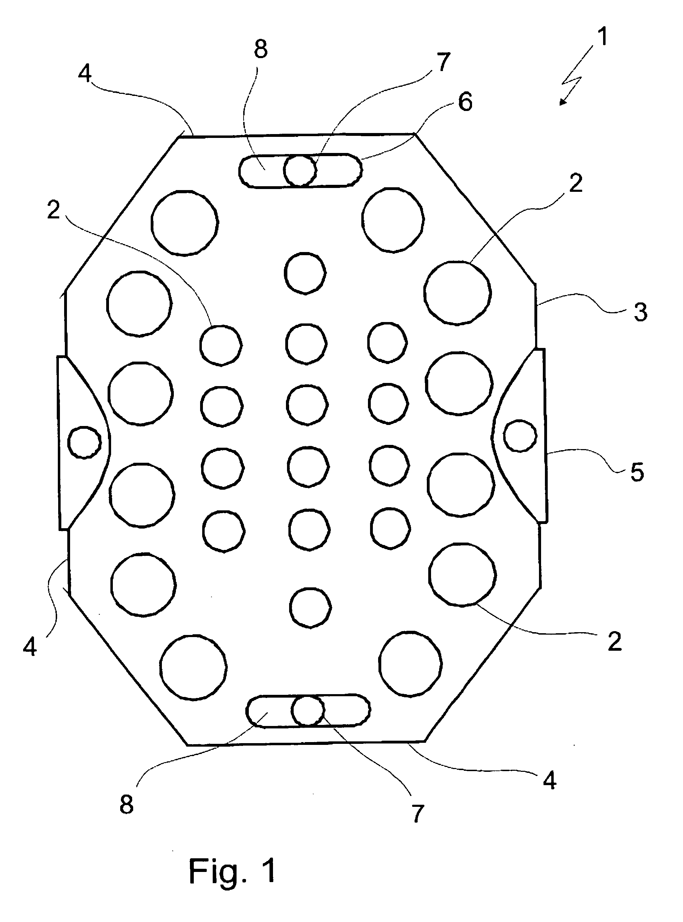

In Fig. 1 ist eine Aufsicht auf ein achteckiges Elastomerfederelement 1 in Ruhelage gezeigt. In dem gezeigten Beispiel ist das Elastomerfederelement 1 achteckig geformt und weist eine Vielzahl von Aussparungen 2 auf. Die Aussparungen 2 weisen in dem gezeigten Beispiel eine kreisrunde Grundfläche auf und dienen der Ausbildung einer speziellen Federkennlinie.

Durch die Anordnung und die Verteilung unterschiedlich geformter und/oder unterschiedlich großer Aussparungen 2 ist es möglich, progressive Federkennlinien zu realisieren. In den vertikalen 3 und horizontalen 4 Randbereichen sind Einrichtungen 5 zum Verankern der gegenüber einander zu federnden Elemente angeordnet. In dem gezeigten Beispiel sind in den seitlichen Bereichen die Verbindungen zu dem (nicht gezeigten) Federungsunterteil angeordnet. Je nach verwendetem Elastomer und/oder gewünschter Federung kann die Verbindung zwischen dem Elastomerfederelement 1 und dem Federungsunterteil mittels eines losen 11 oder formschlüssigen 10 Lagerverbundes ausgebildet sein. Im Fall der Verwendung von Elastomeren, die auf Zug belastet werden können, bietet sich in der Regel eine formschlüssige Verbindung 10 an. Bei Elastomeren, die nicht auf Zug belastet werden können wird eine lose Aufnahme 11 des Elastomerfederelements 1 bevorzugt. Im oberen und unteren Bereich der Darstellung des Elastomerfederelements 1 sind Aussparungen 6 zur Aufnahme eines Vorsprunges 7 des Federungsoberteils (beispielsweise der Sitzflächenunterseite) angeordnet. Diese Aussparungen / Lager 6 sind als Langloch ausgebildet und können den Vorsprung 7 des Federungsoberteils aufnehmen. Durch die Ausbildung der Aussparungen 6 als Langlöcher ist es möglich, dem Sitz in diesem Bereich einen gewissen Freilauf 8 zu geben, in dem keine Federung und keine Dämpfung durch das Elastomerfederelement 1 erfolgt. Dadurch ist es möglich, den Fahrzeugsitz ohne erheblichen Widerstand in eine angenehme Sitzposition zu bewegen.

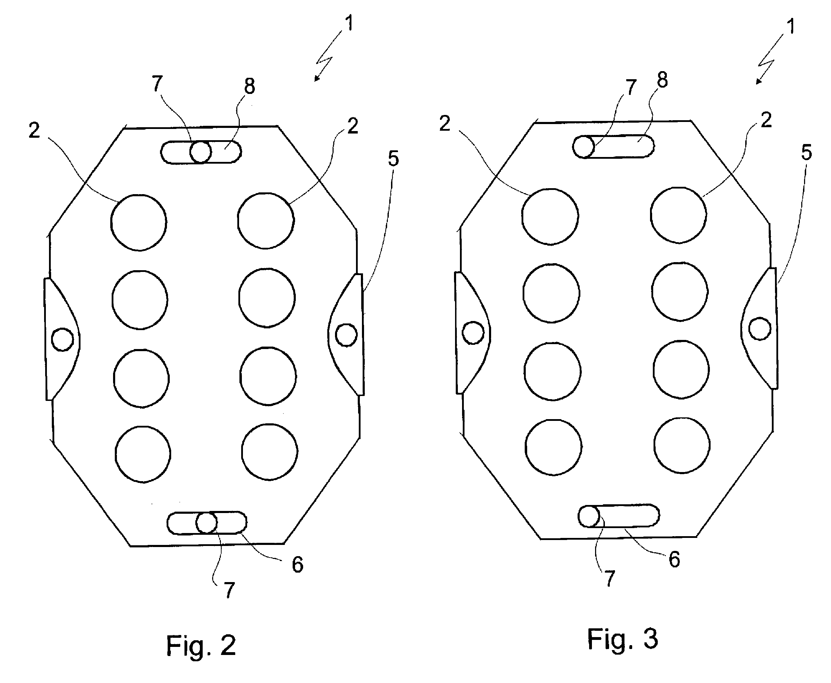

Fig. 2 zeigt eine Aufsicht auf ein achteckiges Elastomerfederelement 1 in Ruhelage mit einer gegenüber dem in Fig. 1 gezeigten Elastomerfederelement 1 veränderter Anzahl und Größe der Aussparungen 2 und damit veränderter Federkennlinie.

Fig. 3 zeigt eine Aufsicht auf das in Fig. 2 gezeigte Elastomerfederelement 1 jedoch in einer geringfügig ausgelenkten Position, bei der der Freilauf 8 ausgenutzt wird. Die Lagerung des Federungsoberteils mittels Vorsprüngen 7 in Langlöchern 6 bietet die Möglichkeit, dem Fahrzeugsitz bei Bewegungen entlang der Langlöcher 6 einen gewissen Freilauf 8 zu geben, in dem keine Federung und keine Dämpfung durch das Elastomerfederelement 1 erfolgt. Die Länge des Freilaufs 8 kann beispielsweise die Hälfte oder ein Viertel oder auch jeden beliebigen anderen geeigneten Streckenanteil des gesamten Federweges betragen.

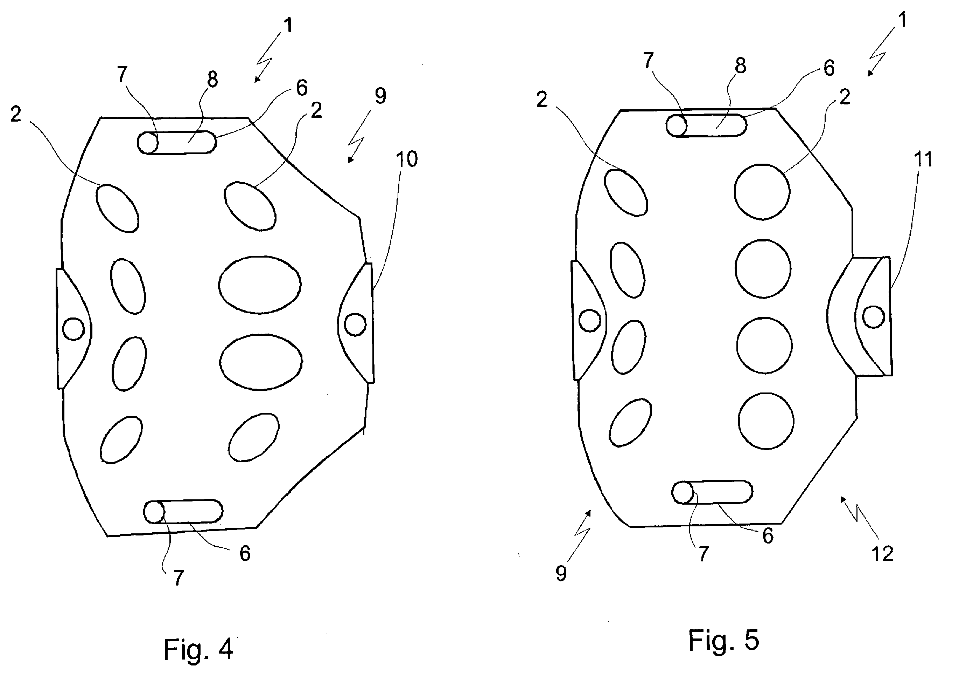

Fig. 4 zeigt eine Aufsicht auf das in Fig. 2 gezeigte Elastomerfederelement 1, jedoch in einer stark ausgelenkten Position, bei der der Freilauf 8 vollständig ausgenutzt wird und zusätzlich eine Verformung 9 des Elastomerfederelements 1 auftritt, in einer Anordnung innerhalb eines formschlüssigen Lagerverbundes 10. Durch ein weiteres Auslenken des Federungsoberteils gegen das Federungsunterteil gegenüber der in Fig. 3 gezeigten Position erfolgt eine Verformung 9 des Elastomerfederelements 1. Durch die in das Elastomerfederelement 1 eingebrachten Aussparungen 2 und deren unterschiedlichen Verformung in Abhängigkeit vom Grad der Auslenkung wird eine progressive Federkennlinie ausgebildet. Bei dem gezeigten Beispiel handelt es sich um ein auf Zug belastbares Elastomer. Es ist mit dem Federungsunterteil über die Verbindung 10 formschlüssig verbunden. Dadurch ist es möglich, Federenergie nicht nur durch das Aufstauchen gegenüber der in Auslenkungsrichtung vorne liegenden Verbindung zu generieren, sondern eine Kombination aus Stauchung und Streckung zu nutzen.

Fig. 5 zeigt eine Aufsicht auf das in Fig. 2 gezeigte Elastomerfederelement 1, jedoch in einer stark ausgelenkten Position, bei der der Freilauf 8 ausgenutzt wird und zusätzlich eine Verformung 9 des Elastomerfederelements 1 auftritt, in einer Anordnung innerhalb eines losen Lagerverbundes 11. Das gezeigte Elastomer ist nicht auf Zug belastbar, weshalb keine formschlüssige Verbindung 10 mit der gegenüber der in Auslenkungsrichtung hinten liegenden Verbindung möglich ist. Der Hauptteil der Verformung 9 des Elastomerfederelements 1 tritt daher in Form von Stauchung im Bereich vor den in den Langlöchern 6 gelagerten Vorsprüngen des Federungsoberteils auf. Im in Auslenkungsrichtung rückwertigen Teil des Elastomerfederelements 1 bleibt ein nahezu unverformter Bereich 12.

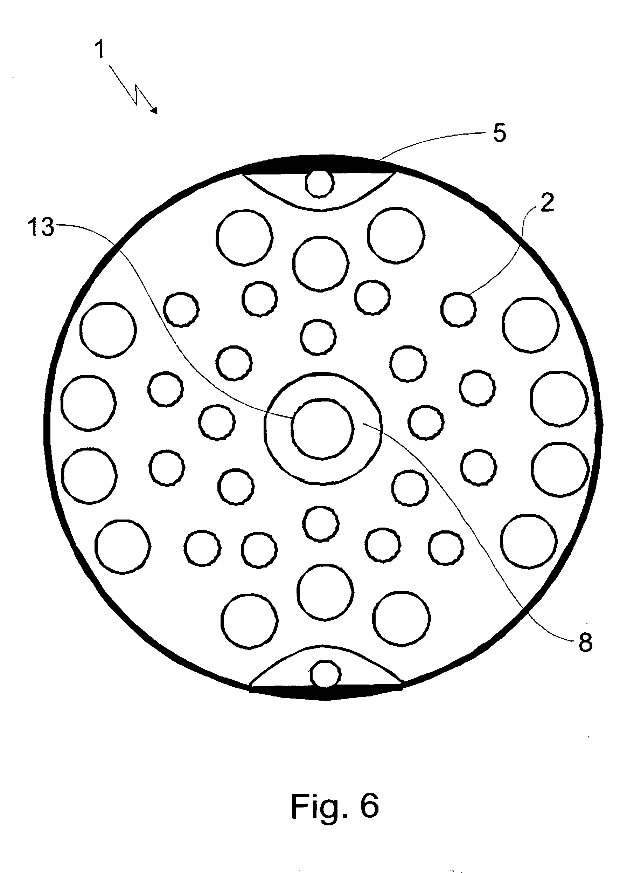

In Fig. 6 ist eine Aufsicht auf ein rundes Elastomerfederelement 1 in Ruhelage gezeigt. In der Mitte ist ein zentraler Lagerpunkt 13 dargestellt. Über diesen ist das Federungsoberteil beweglich gegenüber dem Federungsunterteil gelagert. Wie auch in den oben beschriebenen und in den Figuren gezeigten Elastomerfederelementen 1 weist das Elastomerefederelement 1 im Bereich der Lagerung einen Freilauf 8 auf, der Bewegungen des Federungsoberteils in einem gewissen Rahmen ohne Federung und/oder Dämpfung erlaubt. Die kann jedoch nicht wie in den obigen Beispielen über Langlöcher 6 realisiert werden, sondern wird durch eine kreisförmige Aussparung 6 im Bereich der Lagerung gewährleistet. Erst bei einer Auslenkung über diesen Freilaufbereich 8 hinaus erfolgt eine Verformung 9 des Elastomerfederelements 1 und damit eine Federung und/oder Dämpfung. Im oberen und unteren Bereich der Darstellung sind die Verbindungen des Elastomerfederelements 1 zum Federungsunterteil dargestellt. Im gezeigten Beispiel ist das Elastomerfederelement 1 über zwei Verbindungen gegenüber dem Federungsunterteil fixiert. Andere Ausführungsformen sehen eine Vielzahl von Verbindungen vor, beispielsweise vier Verbindungen. Diese befinden sich bevorzugt in Quer- und Längsrichtung des Fahrzeugs, können aber auch in jeder anderen geeigneten Anordnung vorhanden sein.

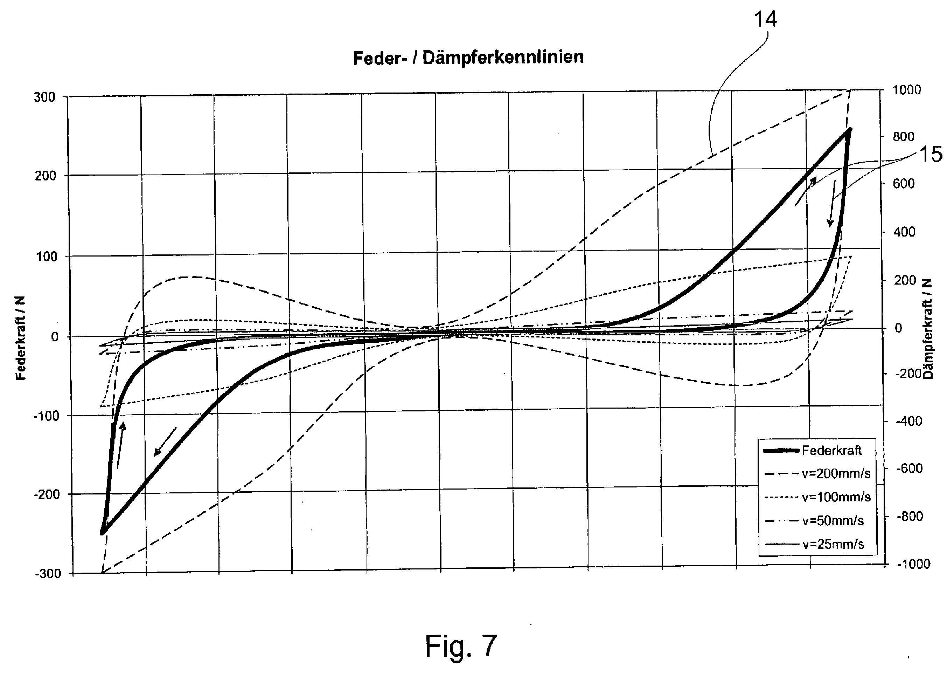

Fig. 7 zeigt eine graphische Darstellung von Feder- / Dämpferkennlinien 14, die eine Hysterese 15 aufweisen. Die Feder- / Dämpferkennlinien 14 sind dabei für verschiedene Federkräfte dargestellt. Unabhängig von der Federkraft haben alle Feder- / Dämpferkennlinien 14 gemeinsam, dass sie sowohl bei einer Auslenkung nach vorne als auch nach hinten eine Hysterese 15 aufweisen. Eine möglichst stark ausgeprägte Hysterese 15 ist vorteilhaft, um ein Aufschaukeln, beispielsweise des Fahrzeugsitzes, zu vermeiden. Je stärker die Hysterese 15 ausgeprägt ist, desto weniger schiebt das Elastomerfederelement 1 das Federungsoberteil zurück in die Ausgangsposition und im Extremfall auch über diese hinaus, was zu einem Aufschaukeln führen kann.

### Bezugszeichenliste

- 1.: Elastomerfederelement
- 2.: Aussparung
- 3.: vertikaler Randbereich
- 4.: horizontaler Randbereich
- 5.: Einrichtungen zum Verankern
- 6.: Lager / Aussparung
- 7.: Vorsprünge des Federungsoberteils
- 8.: Freilauf
- 9.: Verformung
- 10.: formschlüssige Verbindung
- 11.: loser Lagerverbund
- 12.: unverformter Bereich
- 13.: zentraler Lagerpunkt
- 14.: Feder- / Dämpferkennlinien
- 15.: Hysterese

## Patentansprüche

1. Fahrzeugschwingungsvorrichtung, welche eine Horizontalfedereinrichtung umfasst, welche zwischen einem Fahrzeugsitz und/oder einer Fahrerkabine und einem Basiselement eines Fahrzeuges angeordnet ist und zur horizontalen Federung und/oder Dämpfung des Fahrzeugsitzes und/oder der Fahrerkabine gegenüber dem Basiselement geeignet ist,
wobei die Horizontalfedereinrichtung im Wesentlichen parallel zu einer Oberfläche des Basiselementes angeordnet ist,
**dadurch gekennzeichnet, dass**
die Horizontalfedereinrichtung ein in vertikaler Richtung flach ausgebildetes und in horizontaler Richtung verformbares Elastomerfederelement (1) umfasst, welches eine charakteristische, progressive Federkennlinie aufweist.

2. Fahrzeugschwingungsvorrichtung nach Anspruch 1,
**dadurch gekennzeichnet, dass**
die Fahrzeugschwingungsvorrichtung unterhalb eines Fahrzeugsitzes angeordnet ist und abschnittsweise mit diesem verbunden ist.

3. Fahrzeugschwingungsvorrichtung nach Anspruch 1 oder 2.
**dadurch gekennzeichnet, dass**
das Elastomerfederelement (1) direkt mit dem Basiselement verbunden ist, falls das verwendete Elastomer zugbelastbar ist und mittels einer losen Haltevorrichtung (11), welche als Vorsprünge aus dem Basiselement ausgebildet sind, die in komplementär geformte Aussparungen (6) in dem Elastomerfederelement (1) greifen, mit dem Basiselement verbunden ist, falls das verwendete Eleastomer nicht zugbelastbar ist.

4. Fahrzeugschwingungsvorrichtung nach einem der vorangegangenen Ansprüche,
**dadurch gekennzeichnet, dass**
das Elastomerfederelement (1) scheibenartig ausgebildet ist und Ausprägungen, Einschnitte und/oder Aussparungen (2) aufweist.

5. Fahrzeugschwingungsvorrichtung nach Anspruch 4,
**dadurch gekennzeichnet, dass**
die Ausprägungen, Einschnitte und/oder Aussparungen (2) in dem Elastomerfederelement (1) zur gezielten Modulation der Federkennlinie geeignet sind.

6. Fahrzeugschwingungsvorrichtung nach Anspruch 5,
**dadurch gekennzeichnet, dass**
durch die Geometrie und die Position der Ausprägungen, Einschnitte und/oder Aussparungen (2) in dem Elastomerfederelement (1) weg-, geschwindigkeits- und/oder richtungsabhängige progressive Federkennlinien realisierbar sind.

7. Fahrzeugschwingungsvorrichtung nach einem der Ansprüche 4 bis 6,
**dadurch gekennzeichnet, dass**
eine Grundfläche der Ausprägungen, Einschnitte und/oder Aussparungen (2) in dem Elastomerfederelement (1) die Form einer Linie, eines Vielecks, eines Achtecks, eines Sechsecks, eines Fünfecks, eines Vierecks, eines Parallelogramms, eines Rechteckes, eines Dreiecks, eines gleichschenkligen Dreiecks, eines gleichseitigen Dreiecks, eines Kreises, eines Ovals und/oder eines Sterns aufweist.

8. Fahrzeugschwingungsvorrichtung nach einem der vorangegangenen Ansprüche,
**dadurch gekennzeichnet, dass**
das Elastomerfederelement (1) ein Material umfasst, welches bei Druck- und/oder Zugbeanspruchung eine dämpfende Wirkung aufweist, welche gewährleistet, dass bei einer Verformung (9) des Elastomerfederelements (1) aus einer Ausgangslage in eine Belastungslage und bei dem Zurückkehren des Elastomerfederelements (1) aus der Belastungslage in die Ausgangslage diese Verformung gedämpft erfolgt, und somit unerwünschte Eigenresonanzen der Fahrzeugschwingungsvorrichtung reduziert werden.

9. Fahrzeugschwingungsvorrichtung nach einem der vorangegangenen Ansprüche,
**dadurch gekennzeichnet, dass**
das Elastomerfederelement (1) über mindestens ein Lager (6) mit dem Fahrzeugsitz verbunden ist, wobei dieses Lager (6) einen Freilauf (8) aufweist, in welchem der Fahrzeugsitz in mindestens einer horizontalen Richtung, bevorzugt in Längsrichtung des Fahrzeuges, abschnittsweise frei beweglich ist, ohne das Elastomerfederelement (1) zu verformen.

10. Fahrzeugschwingungsvorrichtung nach Anspruch 9,
**dadurch gekennzeichnet, dass**
das scheibenartige Elastomerfederelement (1) über ein einzelnes Lager (13), welches mindestens in einer horizontalen Richtung im Zentrum des Elastomerfederelementes (1) angeordnet ist, mit dem Fahrzeugsitz verbunden ist.

11. Fahrzeugschwingungsvorrichtung nach Anspruch 9,
**dadurch gekennzeichnet, dass**
das scheibenartige Elastomerfederelement (1) über mindestens zwei Lager (6), welche bevorzugt in den in Längsrichtung des Fahrzeugs gegenüberliegenden Randbereichen des Fahrzeugsitzes angeordnet sind, mit diesem verbunden ist.

12. Fahrzeugschwingungsvorrichtung nach einem der vorangegangenen Ansprüche,
**dadurch gekennzeichnet, dass**
eine Feder- und/oder Dämpferkennlinie (14) des Elastomerfederelementes (1) eine Hysterese (15) aufweist, welche Resonanzen nach einer Verformung (9) des Elastomerfederelementes (1) reduziert.

## Claims

1. A vehicle oscillation apparatus which comprises a horizontal springing device which is arranged between a vehicle seat and/or a driver's cab and a base element of a vehicle and which is suitable for the horizontal springing and/or damping of the vehicle seat and/or the driver's cab with respect to the base element, wherein the horizontal springing device is arranged substantially parallel to a surface of the base element
**characterized in that**
the horizontal springing device comprises an elastomer spring element (1) which is made flat in a vertical direction and deformable in a horizontal direction which has a characteristic, progressive spring characteristic curve.

2. A vehicle oscillation apparatus according to claim 1, **characterized in that** the vehicle oscillation apparatus is arranged below a vehicle seat and is connected to it locally.

3. A vehicle oscillation apparatus according to claim 1 or 2, **characterized in that** the elastomer spring element (1) is directly connected to the base element if the elastomer used is capable of being loaded under tension, and is connected to the base element by means of a loose holding apparatus 11 which is produced from the base element in the form of projections which engage in recesses (6) shaped in a complementary manner in the elastomer spring element (1) if the elastomer used is not capable of being loaded under tension.

4. A vehicle oscillation apparatus according to any one of the preceding claims, **characterized in that** the elastomer spring element (1) is designed in the form of a disc and has shaped-out portions, indentations and/or recesses (2).

5. A vehicle oscillation apparatus according to claim 4, **characterized in that** the shaped-out portions, indentations and/or recesses (2) in the elastomer spring element (1) are suitable for the purposeful modulation of the spring characteristic curve.

6. A vehicle oscillation apparatus according to claim 5, **characterized in that** progressive spring characteristic curves dependent upon the path, speed and/or direction are implemented by the geometry and the position of the shaped-out portions, indentations and/or recesses (2) in the elastomer spring element (1).

7. A vehicle oscillation apparatus according to any one of claims 4 to 6, **characterized in that** a base area of the shaped-out portions, indentations and/or recesses (2) in the elastomer spring element (1) has the shape of a line, a polygon, an octagon, a hexagon, a pentagon, a square, a parallelogram, a rectangle, a triangle, an isosceles triangle, an equilateral triangle, a circle, an oval and/or a star.

8. A vehicle oscillation apparatus according to any one of the preceding claims, **characterized in that** the elastomer spring element (1) consists of a material which when acted upon with pressure and/or tension has a damping effect which ensures that during a deformation (9) of the elastomer spring element (1) from a starting position into a loading position and during the return of the elastomer spring element (1) from the loading position into the starting position this deformation takes place in a damped manner, and in this way undesired natural resonances of the vehicle oscillation apparatus are reduced.

9. A vehicle oscillation apparatus according to any one of the preceding claims, **characterized in that** the elastomer spring element (1) is connected to the vehicle seat by way of at least one bearing (6), wherein this bearing (6) has a freewheel (8) in which the vehicle seat is freely movable locally in at least one horizontal direction, preferably in the longitudinal direction of the vehicle, without deforming the elastomer spring element (1).

10. A vehicle oscillation apparatus according to claim 9, **characterized in that** the disclike elastomer spring element (1) is connected to the vehicle seat by way of an individual bearing (13) which is arranged in the centre of the elastomer spring element (1) at least in a horizontal direction.

11. A vehicle oscillation apparatus according to claim 9, **characterized in that** the disc-like elastomer spring element (1) is connected to the vehicle seat by way of at least two bearings (6) which are preferably arranged in the edge regions of the vehicle seat which are opposite in the longitudinal direction of the vehicle.

12. A vehicle oscillation apparatus according to any one of the preceding claims, **characterized in that** a spring and/or damper characteristic curve (14) of the elastomer spring element (1) has a hysteresis (15) which reduces resonances after a deformation (9) of the elastomer spring element (1).

## Revendications

1. Dispositif vibratoire de véhicule, qui comprend un dispositif de ressort horizontal, qui est agencé entre un siège de véhicule et/ou une cabine de conduite et un élément de base d'un véhicule, et qui convient à la suspension et/ou à l'amortissement horizontal du siège de véhicule et/ou de la cabine de conduite par rapport à l'élément de base, dans lequel le dispositif de ressort horizontal est agencé sensiblement parallèlement à une surface de l'élément de base, **caractérisé en ce que** le dispositif de ressort horizontal comprend un élément de ressort en élastomère (1), à configuration plate dans la direction verticale et déformable dans la direction horizontale, qui présente une courbe caractéristique de ressort progressive.

2. Dispositif vibratoire de véhicule selon la revendication 1, **caractérisé en ce que** le dispositif vibratoire de véhicule est agencé en dessous d'un siège de véhicule et est relié à ce dernier par segments.

3. Dispositif vibratoire de véhicule selon la revendication 1 ou 2, **caractérisé en ce que** l'élément de ressort en élastomère (1) est directement relié à l'élément de base, dans le cas où l'élastomère utilisé peut être soumis à une contrainte de traction, et est relié à l'élément de base au moyen d'un dispositif de fixation amovible (11) configuré sous forme de saillies dépassant de l'élément de base et entrant en prise avec des évidements formés de manière complémentaire (6) et situés dans l'élément de ressort en élastomère (1), dans le cas où l'élastomère utilisé ne peut être soumis à une contrainte de traction.

4. Dispositif vibratoire de véhicule selon l'une des revendications précédentes, **caractérisé en ce que** l'élément de ressort en élastomère (1) est configuré comme un disque et présente des empreintes, des entailles et/ou des évidements (2).

5. Dispositif vibratoire de véhicule selon la revendication 4, **caractérisé en ce que** les empreintes, entailles et/ou évidements (2) situés dans l'élément de ressort en élastomère (1) conviennent à une modulation ciblée de la courbe caractéristique de ressort.

6. Dispositif vibratoire de véhicule selon la revendication 5, **caractérisé en ce que** des courbes caractéristiques de ressort progressives peuvent être réalisées en fonction de la course, de la vitesse et/ou de la direction, en usant de la géométrie et de la position des empreintes, entailles et/ou évidements (2) situés dans l'élément de ressort en élastomère (1).

7. Dispositif vibratoire de véhicule selon l'une des revendications 4 à 6, **caractérisé en ce qu'**une surface de base des empreintes, entailles et/ou évidements (2) situés dans l'élément de ressort en élastomère (1) présente la forme d'une ligne, d'un polygone, d'un octogone, d'un hexagone, d'un pentagone, d'un quadrilatère, d'un parallélogramme, d'un rectangle, d'un triangle, d'un triangle isocèle, d'un triangle équilatéral, d'un cercle, d'un ovale et/ou d'une étoile.

8. Dispositif vibratoire de véhicule selon l'une des revendications précédentes, **caractérisé en ce que** l'élément de ressort en élastomère (1) comprend un matériau qui, sous l'action d'une sollicitation de compression et/ou de traction, présente un effet amortisseur qui garantit que, lors d'une déformation (9) de l'élément de ressort en élastomère (1) d'une position de départ à une position de contrainte, et lors du retour de l'élément de ressort (1) en élastomère de la position de contrainte à la position de départ, cette déformation subit un amortissement, et ainsi les résonances propres indésirables du dispositif vibratoire de véhicule sont réduites.

9. Dispositif vibratoire de véhicule selon l'une des revendications précédentes, **caractérisé en ce que** l'élément de ressort en élastomère (1) est relié au siège de véhicule via au moins un palier (6), ce palier (6) présentant une course libre (8), dans laquelle le siège de véhicule est librement déplaçable par segments dans au moins une direction horizontale, de préférence dans la direction longitudinale du véhicule, sans déformation de l'élément de ressort en élastomère (1).

10. Dispositif vibratoire de véhicule selon la revendication 9, **caractérisé en ce que** l'élément de ressort (1) en élastomère en forme de disque est relié au siège du véhicule via un palier unique (13) agencé au moins dans une direction horizontale au centre de l'élément de ressort en élastomère (1).

11. Dispositif vibratoire de véhicule selon la revendication 9, **caractérisé en ce que** l'élément de ressort en élastomère (1) en forme de disque est relié au siège de véhicule via au moins deux paliers (6) qui de préférence sont agencés dans les zones de bord du siège de véhicule, opposées dans la direction longitudinale du véhicule.

12. Dispositif vibratoire de véhicule selon l'une des revendications précédentes, **caractérisé en ce qu'**une courbe caractéristique de ressort et/ou d'amortissement (14) de l'élément de ressort en élastomère (1) présente une hystérésis (15), qui réduit les résonances après une déformation (9) de l'élément de ressort en élastomère (1).
